Europäisches Patentamt

European Patent Office

Office européen des brevets

(19)

(11) Veröffentlichungsnummer: **0 188 996**
**B1**

(12) **EUROPÄISCHE PATENTSCHRIFT**

(45) Veröffentlichungstag der Patentschrift: **27.12.90**

(21) Anmeldenummer: **85730140.2**

(22) Anmeldetag: **15.10.85**

(51) Int. Cl.⁵: **C 01 B 3/00, F 17 C 11/00**

(54) **Metallhydridspeicher und Verfahren zu seiner Herstellung.**

(30) Priorität: **21.01.85 DE 3502311**

(43) Veröffentlichungstag der Anmeldung:
**30.07.86 Patentblatt 86/31**

(45) Bekanntmachung des Hinweises auf die
Patenterteilung:
**27.12.90 Patentblatt 90/52**

(84) Benannte Vertragsstaaten:
**DE FR GB IT**

(56) Entgegenhaltungen:
**FR-A-2 508 596**
**GB-A-2 122 330**
**US-A-4 133 426**

(73) Patentinhaber: **MANNESMANN Aktiengesellschaft**
**Mannesmannufer 2**
**D-4000 Düsseldorf 1 (DE)**

(72) Erfinder: **Halene, Clemens**
**Pigageallee 23**
**D-4000 Düsseldorf 13 (DE)**

(74) Vertreter: **Meissner, Peter E., Dipl.-Ing. et al**
**Patentanwaltsbüro Meissner & Meissner,**
**Herbertstrasse 22**
**D-1000 Berlin 33 (DE)**

EP 0 188 996 B1

## Beschreibung

Die Erfindung betrifft einen Metallhydridspeicher zur Speicherung von Wasserstoff gemäß dem Oberbegriff des Patentanspruchs 1 sowie ein Verfahren zu seiner Herstellung.

Metallhydride dienen in erster Linie zur Speicherung von Wasserstoff. In einen Druckbehälter aus nichthydrierbarem Metall eingebracht, sind sie in der Lage, eine Vielzahl von Aufgaben zu erfüllen. Diese Fähigkeit beruht auf der physikalischen Erscheinung, daß die Wasserstoffkonzentration in der Metallschmelze sich in Abhängigkeit vom Wasserstoffdruck und von der Temperatur einstellt. Hydrierfähige Metallschmelzen werden normalerweise in granulierter Form in druckfeste Behälter eingebracht. Bei der Entwicklung geeigneter Druckbehälter erweist sich als gravierendes Problem, daß die pulverförmig eingebrachte Speichermasse sich in erheblichem Maße ausdehnt. Dabe ist die Volumenzunahme wesentlich größer als an sich infolge der beim Hydrierprozeß auftretenden Kristallgitterdehnung zu erwarten wäre. Ursächlich hierfür ist die zusätzliche Volumenzunahme, die auf die fortschreitende Zerkleinerung des spröden Speichermaterials zurückzuführen ist.

Des weiteren hat sich gezeigt, daß bei hohen Strömungsgeschwindigkeiten des Wasserstoffs eine Umverteilung von Speichermasse innerhalb des Druckbehälters erfolgen kann. Diese Umverteilung von Speichermasse führt partiell zur Überschreitung der maximal zulässigen Fülldichte und infolge nachfolgender Beladungen schließlich zur Zerstörung des Druckbehälters. Dehnungen an Druckbehältern, die somit als Folge übermäßiger Kräfte im Pulverbett auftreten, stellen ein ernstzunehmendes sicherheitstechnisches Problem dar. Da eine Verhinderung fortschreitender Verformung durch entsprechende Dimensionierung der Druckbehälterwandung zu einem nicht akzeptablen Speichergewicht führt, erweist sich die strenge Begrenzung der effektiven Fülldichte als nächstliegende Lösung.

Das Reaktionsverhalten von Hydridspeichern im Hinblick auf schnelles, d.h. mit hoher Leistung ablaufendes Be- und Entladen, läßt häufig zu wünschen übrig. Verantwortlich dafür ist insbesondere die schlechte Wärmeleitfähigkeit pulverisierter Metallschmelzen, die das Binden und Freisetzen der Enthalpie technisch in hohem Maße erschwert. Wie gravierend der Einfluß der Pulverstruktur ist, zeigt sich z.B. daran, daß die technisch realisierbare Fülldichte der pulverisierten Metallschmelze bei etwa 50% der theoretischen Fülldichte (massiver Block der Metallschmelze) liegt.

Zur Verbesserung des Wärmeaustauschs sind aus der DE—PC 31 25 276 lamellenförmige Schottbleche bekannt, die als Wärmeleitelemente dienen und die hydridbildende Metallschmelze in axialer Richtung des Druckbehälters in Scheiben unterteilen. Beim Bau des Metallhydridspeichers wird dabei die granulierte Metallschmelze vorzugsweise in Form von zylinderförmigen Presslingen (Pellets) eingebracht, die jeweils einen zentralen Durchbruch für das zentral im Inneren des Druckbehälters angeordnete Gasführungsrohr aufweisen. Der Zweck der Pelletisierung ist es, eine exakte Dosierung der Pulvereinbringung in den Druckbehälter, und zwar in möglichst einfach handhabbarer Form und unter Verringerung der Brandgefahr, vornehmen zu können. Die Herstellung der Pellets selbst ist jedoch mit zahlreichen Nachteilen verbunden. Um eine ausreichende Festigkeit des aus der pulverisierten, äußerst spröden Metallschmelze gepressten Pellets zu gewährleisten, wird dem Metallpulver vor dem Verpresse Aluminiumpulver in einer Größenordnung von etwa 5 Volumen-% als "Bindemittel" zugemischt. Diese Zugabe von Aluminiumpulver verbessert zwar die Wärmeleitfähigkeit des Hydridspeichers in beschränktem Maße, hat aber gleichzeitig den Nachteil, daß bei gleichem Volumne des Druckbehälters der einbringbare Volumenanteil an hydridbildender Metallschmelze entsprechend verringert, also die Speicherkapazität verkleinert wird. Darüber hinaus erfordert das Verpresse der Pellets ein feines Mahlen der Komponenten in einer Bandbreite der Korngröße von 50 µm bis 250 µm.

Der ausgesprochen pyrophore Charakter der hydridbildenden Metallschmelze erfordert dabei besondere sicherheitstechnische Maßnahmen im Fertigungsablauf, z.B. die Anwendung von Schutzgas, wodurch die Verarbeitung insgesamt in hohem Maße erschwert wird.

Aus technischer Sicht stellt die geschilderte Lösung insbesondere wegen der Beachtung der zulässigen Fülldichte einen geeigneten Metallhydridspeicher mit ausreichender Be- und Entladecharakteristik und gleichzeitig ausreichender Betriebsfestigkeit über die für ihn erforderliche Lebensdauer dar. Es bleibt jedoch der Nachteil, daß die erforderlichen Produktionsschritte (Vermahlen, Vermischen, Pressen) außerordentlich konstenintensiv sind und die wirtschaftliche Herstellung des Metallhydridspeichers stark beeinträchtigen. Darüber hinaus ist festzustellen, daß Beimengungen von Aluminiumpulver eine Wiederverwendung der Metallschmelz für den Zweck der Wasserstoffspeicherung praktisch ausschließen, da das Aluminiumpulver weder mechanisch, noch schmelztechnisch, zumindest nicht mit vertretbarem Aufwand von der hydridbildenden Schmelze getrennt werden kann.

Aufgabe der Erfindung ist es daher, einen Metallhydridspeicher so auszubilden, daß er bei gegebenem Druckbehältervolumen eine möglichst große Wasserstoffspeicherkapazität aufweist und seine Herstellung kostengünstiger wird. Dabei sollen die Anforderungen hinsichtlich Betriebsfestigkeit, Lebensdauer, Unfallsicherheit und Qualitätssicherung uneingeschränkt erfüllt werden. Schließlich soll ein Verfahren angegeben werden zur Herstellung und Aktivierung des erfindungsgemäßen Metallhydridspeichers.

Gelöst wird diese Aufgabe durch einen Metallhydridspeicher mit den Merkmalen des Patenanspruchs 1, wobei vorteilhafte Weiterbildungen in den Unteransprüchen 2—14 angegeben sind. Die Ansprüche 15 bis 17 charakterisieren erfindungsgemäße Varianten eines Verfahrens zur Herstellung und Aktivierung des Metallhydridspeichers. Nähere Erläuterungen der Erfindung ergeben sich aus den nachfolgenden Ausführungen.

Ausgehend von einem Metallhydridspeicher gemäß DE—PC 31 25 276 liegt der Erfindung der Gedanke zugrunde, eine genaue Dosierung der einzubringenden pulverisierten Metallschmelze anstelle von Pellets dadurch zu gewährleisten, daß die granulierte Metallschmelze in Dosen verfüllt wird, die ohne großen Aufwand in den Druckbehälter eingelegt werden können. Die Dosen werden jeweils vollständig mit dem Granulat der hydrierfähigen Metallschmelze gefüllt. Auf diese Weise enthält jede Dose die gleiche Menge an granulierter Metallschmelze. Da die Dosen außerdem verschlossen sind, ist eine sehr einfache und sichere Handhabung möglich. Die Dosen, die aus einem Ober- und einem Unterteil bestehen, haben im wesentlichen eine flache zylindrische Form und weisen einen zentralen Durchbruch auf. Dieser Durchbruch ist im montierten Zustand für das zentral im Druckbehälter angeordnete Gasführungsrohr vorgesehen. Beim Füllen des Druckbehälters mit der granulierten Metallschmelze werden die Dosen also in axialer Richtung übereinander gestapelt. Erfindungsgemäß ist vorgesehen, daß die Dosen so gestaltet sind, daß bei vollständiger Füllung des Druckbehälters mit den Dosen das Volumen aller eingebrachten Dosen in der Summe kleiner ist, als das Nettoinnenvolumen des Druckbehälters selbst (Innenvolumen des Druckbehälters abzüglich Volumen des Gasführungsrohres). Die Volumendifferenz soll mindestens so groß sein, wie der spezifische Volumenzuwachs der jeweilig verwendeten Metallschmelze im hydrierten Zustand nach mehrfachem Be- und Entladen gegenüber dem ursprünglichen unbeladenen Zustand. Durch diese Maßgabe wird sichergestellt, daß die Metallschmelze sich im beladenen Zustand ohne weiteres ausdehnen kann und dabei eine Verformung der Dosen bewirkt, ohne daß jedoch der Druckbehälter selbst in Mitleidenschaft gezogen wird. Das bedeutet, daß bereits mit der ersten Beladung mit Wasserstoff im Inneren des Druckbehälters an den einzelnen Dosen, die die hydrierfähige Metallschmelze enthalten, bleibende Verformungen hervorgerufen werden. Die einzelnen Dosen sind jedoch so gestaltet, daß auch im verformten Zustand die Metallschmelze in Scheibenform zwischen dem Dosenunterteil und dem Dosenoberteil eingeschlossen bleibt. Dadurch werden unkontrollierte Materialverlagerungen innerhalb des Druckbehälters während des Betriebes vermieden.

Während der Be- und Entladevorgänge erweisen sich die Dosenunter- und -oberteile als hervorragend geeignete Wärmeleitbleche Einer der wesentlichen Vorteile der erfindungsgemäßen Lösung ist, daß die hydrierfähige Metallschmelze nicht mehr so fein aufgemahlen werden muß wie nach dem Stand der Technik, da eine Korngröße von 0,2—2 mm völlig ausreicht. Es ist lediglich darauf zu achten, daß die Kornzusammensetzung statistisch gesehen etwa konstant bleibt, damit bei gleichem Füllvolumen der Dosen auch tatsächlich immer die gleiche Materialmenge in den Druckbehälter eingebracht wird. Darüber hinaus entfällt auch der Preßvorgang für die Erzeugung von Pellets und ebenso die Zumischung eines Anteils an Aluminiumpulver. Hierdurch kann einerseits die Speicherkapazität des Metallhydridspeichers pro Volumeneinheit des Druckbehälters erhöht werden und andererseits die Wiederverwertbarkeit der hydrierfähigen Metallschmelze sichergestellt werden. Die Verwendung der Dosen macht nicht nur wesentliche Arbeitsgänge überflüssig, sondern ermöglicht darüber hinaus auch einen einfachen Transport der hydrierfähigen Metallschmelze von der Erzeugungsstätte zur Verwendungsstätte.

Um eine einfache Dosierung der granulierten Metallschmelze zu ermöglichen, sollte das Dosenunterteil in den das Schmelzengranulat eingefüllt wird und auf das dann das Dosenoberteil aufgesetzt wird, so ausgebildet sein, daß an seiner offenen Seite der Außenmantel in einer Ebene mit dem Innenmantel, der die Dose zum zentralen Durchbruch hin abschließt, endet. Dadurch wird ein einfaches und gleichmäßiges Füllen der Dose gewährleistet, indem sie mit reichlich Granulat gefüllt wird und das überschüssige Granulat einfach abgestreift wird.

Vorteilhaft übergreift das Dosenoberteil mit seinem Außen- und seinem Innenmantel das Dosenunterteil. Eine Umkehr dieser Ausführungsform ist selbstverständlich auch möglich. Als zweckmäßig hat sich erwiesen, den Außenmantel des Dosenunterteils im oberen, von Dosenoberteil übergriffenen Bereich nach innen zu kröpfen. Dadurch ist es möglich, daß das Dosenoberteil und das Dosenunterteil im montierten Zustand nach außen in einer glatten zylindrischen Flächen abschließen.

Dadurch wird eine großflächige Anlage der äußeren Zylindermantelfläche der Dose an den Zylinderinnenmantel des Druckbehälters und damit eine gute Wärmeleitung vom Behälteräußeren in das Behälterinnere ermöglicht. Aus diesem Grunde besteht weiterhin eine bevorzugte Ausführung des Metallhydridspeichers darin, daß die Außenmäntel von Dosenober- und -unterteil von vornherein an der Innenwand des Druckbehälters anliegen. Dementsprechend wird als vorteilhaft angesehen, das Ausdehnungsvolumen für die hydrierfähige Metallschmelze in der Nähe des Gasführungsrohres, also im Bereich des zentralen Durchbruchs der einzelnen Dosen vorzusehen.

Eine zweckmäßige Ausführung besteht darin, daß dieser Durchbruch im Bereich des Dosenoberteils eine zylindrische Form aufweist, die nach unten hin, also lediglich im Bereich des Dosenunterteils in eine kegelige Form übergeht, d.h. genauer gesagt, einen Kegelstumpf darstellt. Nach der Erfindung ist vorgesehen, daß das Dosenunterteil und das Dosenoberteil jeweils so gestaltet sind, daß durch die Verformung infolge

des Ausdehnens der hydrierfähigen Metallschmelze beim Beladen mit Wasserstoff die Dose so verformt wird, daß einerseits ihr Kontakt mit der Innenwand des Druckbehälters erhalten bleibt und andererseits eine dichte Anlage des Dosenoberteils und des Dosenunterteils an das Gasführungsrohr erfolgt. Dosenoberteil und Dosenunterteil sind also so großflächig ausgelegt, daß dieses Anlegen gewährleistet bleibt. Im Hinblick auf die Ausführungsform der Dosen mit einem teils zylindrischen und teils kegelförmigen Durchbruch ist daher vorgesehen, daß die Mantellinien des Kegels und des Zylinders in der Summe größer sind als der Grundkreisradius des Kegels abzüglich Außenradius des Gasführungsrohres. Dementsprechend sollte der Innenmantel (am Zentralen Durchbruch) des Dosenoberteils in seiner Höhe so bemessen sein, daß er mit dem Gasführungsrohr zur Anlage kommt, wenn er in die Ebene der Deckfläche des Dosenoberteils gestreckt wird.

Um eine problemloses Hantieren mit den gefüllten Dosen zu ermöglichen, sollten Dosenunterteil und Dosenoberteil gegen unbeabsichtiges Öffnen gesichert sein. Dies kann beispielsweise durch eine formschlüssige Verbindung, also etwa durch Anbringung einer übergreifenden Bördelung am Rand des Innenmantels des Dosenoberteils geschehen. Denkbar sind aber auch kraftschlüssige Sicherungen oder andere formschlüssige Verbindungen.

Eine weitere vorteilhafte Ausgestaltung der Erfindung besteht darin, am Boden des Dosenunterteils und/oder umgekehrt an der Deckfläche des Dosenoberteils eine oder mehrere ringförmig um das Gasführungsrohr bzw. um den zentralen Durchbruch herum verlaufende in das Doseninnere gewölbte Sicke vorzusehen. Diese trägt ebenfalls dazu bei, einen Teil der Volumenzunahme der hydrierfähigen Metallschmelze beim Beladen mit Wasserstoff aufzufangen.

In manchen Fällen kann es zweckmäßig sein, das Volumen der hydrierfähigen Metallschmelze innerhalb der Dose noch zu unterteilen. Hierzu können beispielsweise ein oder mehrere ringförmige, in ähnlicher Form wie das Dosenunterteil ausgebildete Zwischenböden in die Dose eingelegt werden, wodurch eine weitere Unterteilung der Metallschmelze in axialer Richtung des Metallhydridspeichers entsteht. Auch Aufteilung in radialer Richtung sind möglich, beispielsweise sektorförmig durch entsprechende Zwischenwände. Da diese Zwischenböden oder Zwischenwände aus einem Material mit guter Wärmeleitfähigkeit hergestellt werden können (z.B. aus Metall) wird die Wärmeleitung innerhalb des Metallhydridspeichers hierdurch noch besser.

Das Verfahren zur Herstellung und Aktivierung eines Metallhydridspeichers besteht in folgenden Maßnahmen: Zunächst wird die hydrierfähige Metallschmelze in einer Granulatgröße von 0,2—2 mm hergestellt. Die für die Aufnahme der hydrierfähigen Metallschmelze vorgesehenen Dosen werden vollständig mit dem Granulat gefüllt und mit einem Dosenoberteil verschlossen. Der im wesentlichen zylinderförmige Druckbehälter ist an einer Stirnseite offen und wird mit den Dosen vollständig gefüllt.

Dabei verläuft das zentral angeordnete Gasführungsrohr durch die zentralen Durchbrüche der einzelnen Dosen. Danach wird die offene Stirnseite des Druckbehälters verschlossen und der Metallhydridspeicher in an sich bekannter Weise aktiviert. Dies geschieht dadurch, daß das Behälterinnere evakuiert und der gesamte Metallhydridspeicher erhitzt wird. Anschließend erfolgt die erste Beladung mit Wasserstoff. Diese Beladung mit Wasserstoff bewirkt eine erhebliche Volumenzunahme der hydridbildenden Metallschmelze, die dazu führt, daß die einzelnen Dosen, deren Gesamtvolumen kleiner ist als das Nettoinnenvolumen des Druckbehälters, verformt werden. Nach dieser Verformung liegen die Dosenunter- und -oberteile jeweils sowohl an der Innenwand des Druckbehälters als auch an der Außenwand des Gasführungsrohres an. Hierdurch wird vermieden, daß sich die hydrierfähigen Metallschmelze, die quasi scheibenförmig im Druckbehälter angeordnet ist, unkontrolliert im Behälterinneren verlagert. Die Herstellung eines aktivierten erfindungsgemäßen Metallhydridspeichers ist gegenüber dem Stand der Technik erheblich einfacher und billiger, da auf die Durchführung aufwendiger Verfahrensschritte wie das Feinmahlen des Granulates, das Mischen mit Aluminiumpulver und das Erzeugen von Pellets verzichtet werden kann. Außerdem weist der auf diese Weise hergestellte Metallhydridspeicher ein hervorragendes Reaktionsverhalten im Hinblick auf ein schnelles Be- und Entladen auf, da die Dosenober- und -unterteile sowie ggf. die Zwischenböden eine sehr gute Wärmeleitung zwischen dem Inneren und dem Äußeren des Druckbehälters ermöglichen.

In Abänderung dieses Verfahrens ist es auch möglich, die Speichermasse bereits in der Dose, also noch außerhalb des Druckbehälters zu evakuieren und zu erhitzen. Zur Immunisierung gegenüber atmosphärischen Einflüssen sollte dann aber in die einzelnen Dosen Schutzgas gegeben werden. Bei dieser Vorgehensweise erübrigt sich eine Evakuierung und Erhitzung des gesamten Metallhydridspeichers. Nach dem Füllen des Druckbehälters mit den die Speichermasse enthaltenden Dosen und dem Verschließen des Druckbehälters ist zur Aktivierung lediglich noch die Beladung mit Wasserstoff erforderlich.

Die Erfindung wird anhand der nachfolgenden Ausführungsbeispiele näher erläutert. Es zeigen:

Fig. 1 einen teilweise aufgeschnittenen Druckbehälter im montierten, aber noch nicht hydrierten Zustand,

Fig. 2 einen Schnitt durch eine Ausführungsform der mit hydrierfähiger Metallschmelze gefüllten Pulverdosen in noch nicht hydriertem Zustand,

Fig. 3 einen Schnitt durch die mit hydrierfähiger Metallschmelze gefüllten Dosen nach der Hydrierung,

Fig. 4 einen Schnitt entsprechend Fig. 2 durch eine andere Ausführung der Dosen,

Fig. 5 einen Schnitt entsprechend Fig. 2 durch eine Ausführung der Dosen mit eingelegten Zwischenböden.

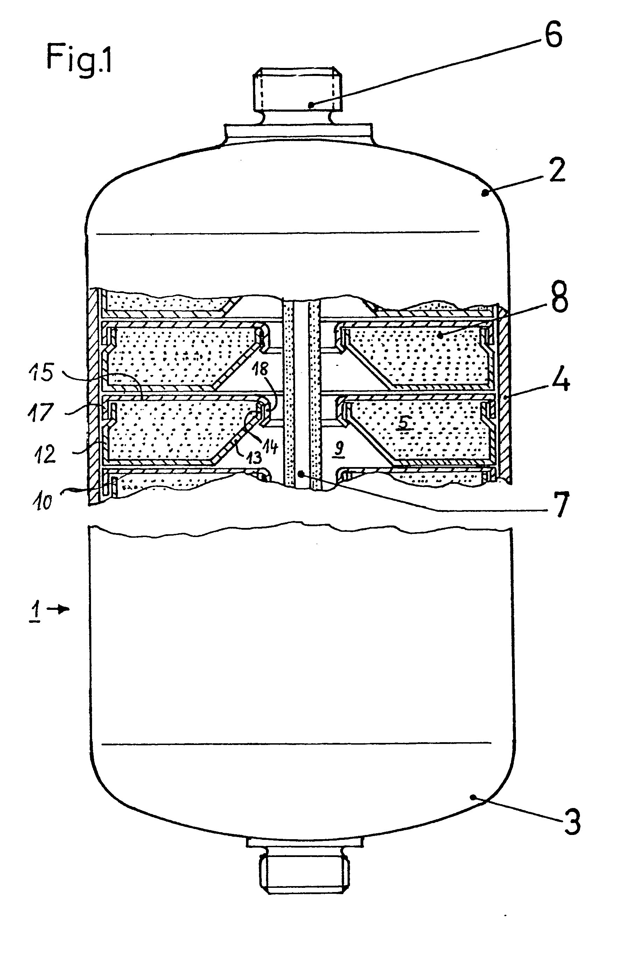

Der in Fig. 1 in noch nicht hydriertem Zustand dargestellte Metallhydridspeicher 1 besteht zunächst aus einem zylindrischen, rohrfömigen Mittelteil 4, das an seinen Stirnseiten durch die Kappen 2, 3 verschlossen ist. Die beiden Kappen 2, 3 sind jeweils mit einem zentral angeordneten Gasnippel 6 versehen. Im Inneren des Druckbehälters 1 verläuft in axialer Richtung das zentral angeordnete als Filterrohr ausgebildete Gasführungsrohr 7. Ringförmig um dieses Gasführungsrohr 7 sind dicht aneinandergereiht zahlreiche Dosen 5 herumgelegt, die jeweils vollständig mit granulierter hydrierfähiger Metallschmelze 8 gefüllt sind.

Die Dosen 5 bestehen jeweils aus einem Dosenunterteil 10 und einem Dosenoberteil 15. Das Dosenunterteil 10 weist einen Außenmantel 12 auf, der zur offenen Seite des Dosenunterteils hin nach innen eingezogen ist, also eine nach innen gekröpfte Form hat. Der Innenmantel des Dosenunterteils besteht aus einem zylinderförmigen Abschnitt 14 und einem kegelförmigen, oder besser als Kegelstumpf ausgebildeten Abschnitt 13.

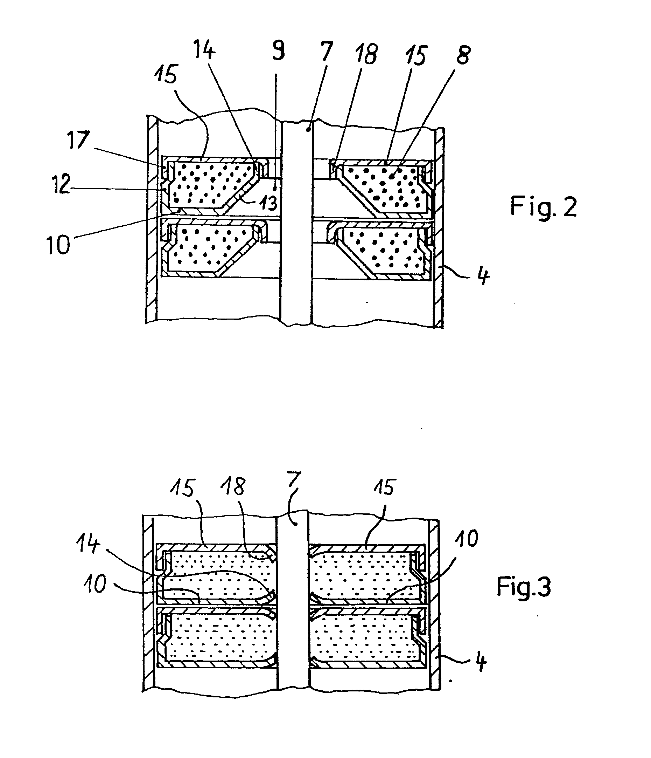

Der Innenmantel 13, 14 und der Außenmantel 12 des Dosenunterteils 10 enden in einer gemeinsamen Ebene: Das Dosenoberteil 15 übergreift mit seinen im wesentlichen zylindrischen Außenmantel 17 und seinem ebenfalls im wesentlichen zylindrischen Innenmantel 18 den oberen Bereich des Außenmantels 12 bzw. des Innenmantels 13, 14 des Dosenunterteils 12. Aufgrund dieser Gestaltung der Dosen 5 verbleibt zwischen dem Gasführungsrohr 7 und den einzelnen Dosen 5 jeweils ein ringförmiger Freiraum 9, der als Ausdehnungsraum für die hydrierfähige Metallschmelze vorgesehen ist. Mit den etwa bündig abschließenden zylindrischen Außenmänteln 12, 17 des jeweiligen Dosenunter- und -oberteils 10, 15 liegen die Dosen 5 relativ dicht an den Innenoberfläche des zylindrischen Teils 4 des Druckbehälters 1 an. In Fig. 2 ist ebenfalls im aufgeschnittenen Zustand eine einfache Version der mit hydrierfähiger Metallschmelz 8 gefüllten Dosen 5 dargestellt. Da sich die hydrierfähige Metallschmelze 8 beim Beladen mit Wasserstoff erheblich im Volumen ausdehnt, kommt es zu einer bleibenden Verformung der Dosenunter- und -oberteile 10, 15. Diese Verformung ist beispielsweise in Fig. 3 dargestellt. Man sieht, daß sich die in der Nähe des Gasführungsrohres 7 liegenden Teile der Dosen 5 gestreckt haben und zur dichten Anlage an das Gasrohr 7 gekommen sind. Es ist deutlich erkennbar, daß hierdurch sichergestellt wird, daß die scheibenförmig aufgeteilte hydrierbare Metallschmelze 8 sich nicht unkontrolliert zwischen den einzelnen Scheiben verlagern kann. Dies ist eine wichtige Voraussetzung für die Verhinderung bleibender Verformungen an dem äußeren Mantel des Druckbehälters 1. In dem in Fig. 3 dargestellten Zustand ist die hydrierfähige Metallschmelze bereits so weit zerfallen, daß die Korngröße unter 10 µm beträgt.

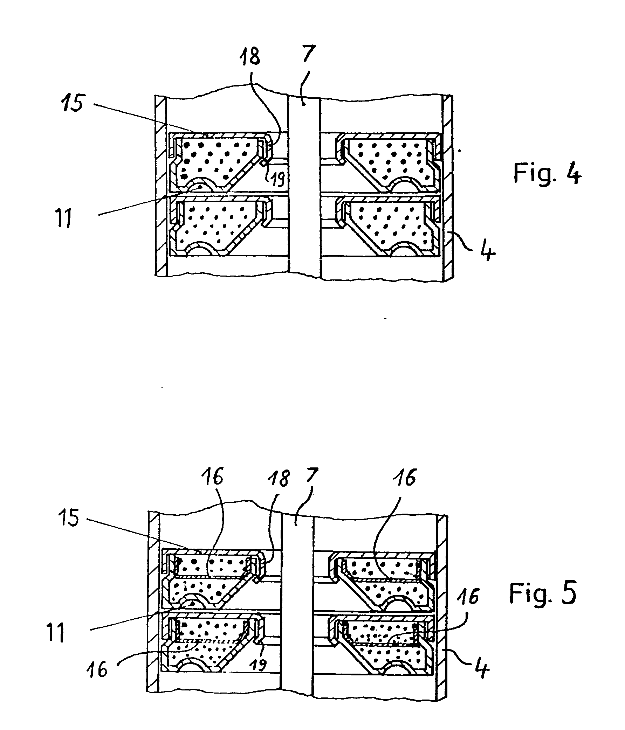

In Fig. 4 ist eine vorteilhafte Weiterbildung der Dosen 5 dargestellt. Diese weisen einerseits eine Bördelung 19 am Rand des zylindrischen Innenmantels 18 auf, der zur formschlüssigen Sicherung des Dosenoberteils 15 gegen unbeabsichtigtes Öffnen dient. Weiterhin ist am Boden des Dosenunterteils 10 jeweils eine ringförmig um das Gasrohr 7 verlaufende nach innen gewölbte Sicke 11 angebracht. Diese Sicke 11 dient ebenfalls dazu, die zu erwartende Volumenzunahme der hydrierfähigen Metallschmelze infolge der Beladung mit Wasserstoff aufzufangen.

Fig. 5 zeigt eine Ausführung der Dosen 5, bei der das Volumen der hydrierfähigen Metallschmelze jeweils durch einen eingelegten ringförmigen Zwischenboden 16 in axialer Richtung unterteilt ist.

Als wesentlich bleibt noch festzustellen, daß die Dimensionierung des Freiraumes 9, die durch die Gestaltung der Außenabmessungen der Dosen 5 festgelegt wird, in Abhängigkeit von den Materialeigenschaften der jeweils zur Anwendung kommenden hydrierfähigen Metallschmelze festgelegt werden muß. Eine wesentliche Einflußgröße dabei ist auch die Granulatgröße der Metallschmelze, da die einzelnen Körner im Zuge der einzelnen Be- und Entladezyklen weiter zerfallen werden und dadurch die bereits geschilderte Volumenzunahme zum Teil hervorrufen. Durch Versuche ist daher zuerst zu ermitteln, welches Endvolumen im hydrierten Zustand pro Gewichtseinheit bei einem bestimmten Material zu erwarten ist. Hierbei handelt es sich also um eine materialspezifische Kenngröße. Weiterhin ist bei der Dimensionierung der Dosen 5 davon auszugehen, daß das Granulat in einer gleichbleibenden statistischen Korngrößenverteilung eingefüllt wird. Das bedeutet also, daß sicherzustellen ist, daß mit einer kompletten Füllung einer Dose immer die gleiche Menge an hydrierfähiger Metallschmelze eingebracht wird.

Zusammenfassen ist noch einmal auf die Vorteile der erfindungsgemäßen Lösung hinzuweisen. Die Pulverdosen

—dienen als direkte Verpackung für das Granulat und zum sicheren Transport vom Hersteller zum Verbraucher,

—dienen ebenso in standardisierter und typisierter Ausführung für eine gleichmäßige Dosierung der hydridbildenden Metallschmelze im Hinblick auf die technisch zulässige Fülldichte,

—gewährleisten einen schnellen und gegenüber der heutigen Technik verbesserten Wärmeaustausch zwischen der hydrierbaren Metallschmelze und dem Äußeren des Druckbehälters,

—haben durch die Sicken am Boden im Deckel die Eigenschaft einer axial gerichteten Federwirkung und kompensieren auftretende Volumendehnungen in ihren Spitzen.

In verfahrenstechnischer Hinsicht ergeben sich für die Herstellung und Aktivierung eines Metallhydridspeichers insbesondere die Vorteile, daß

—eine baubegleitende Qualitätssicherung

5

durch die einfache Handhabung der Speichermasse und durch die Einschränkung der Verfahrensschritte wesentliche vereinfacht wird,

—gravierende Einsparungen bei den Verarbeitungskosten zu erzielen sind, weil komplizierte Mahl- und Preßvorgänge ebenso entfallen wie zusätzliche Transport- und Verpackungskosten,

—im Vergleich zum gegenwärtigen Stand der Technik die Arbeitssicherheit wesentlich erhöht wird, da das Vermahlen und Verpressen der pyrophoren Metallstäube entfällt.

## Patentansprüche

1. Metallhydridspeicher in Form eines zylinderförmigen Druckbehälters mit einem zentral angeordneten Filterrohr als Gasführungsrohr, wobei die granulierte hydrierfähige Metallschmelze durch Schottbleche, die einen zentralen Durchbruch aufweisen, in axialer Richtung in Scheiben unterteilt ist, dadurch gekennzeichnet, daß die Schottbleche vor der ersten Beladung des Metallhydridspeichers mit Wasserstoff jeweils das Ober- (15) und Unterteil (10) einer geschlossenen Dose bilden, deren vollständig mit der hydrierfähigen Metallschmelze (8) verfülltes Volumen in der Summe gegenüber dem Nettoinnenvolumen des Druckbehälters (1) mindestens um den Betrag kleiner ist, der dem spezifischen Volumenzuwachs der jeweilig verwendeten Metallschmelze (8) im hydrierten Zustand nach mehrfachem Be- und Entladen gegenüber dem ursprünglichen unbeladenen Zustand entspricht.

2. Metallhydridspeicher nach Anspruch 1, dadurch gekennzeichnet, daß das Dosenunterteil (10) jeweils einen amzentralen Durchbruch liegenden Innenmantel (13, 14) und einen an der zylindrischen Innenwand (4) des Druckbehälters (1) liegenden Außenmantel (12) aufweist, die nach oben in einer Ebene abschließen.

3. Metallhydridspeicher nach Anspruch 1 oder 2, dadurch gekennzeichnet, daß das Dosenoberteil (15) jeweils das Dosenunterteil (10) mit einem Außenmantel (17) und einem Innenmantel (18) übergreift.

4. Metallhydridspeicher nach Anspruch 3, dadurch gekennzeichnet, daß der Außenmantel (12) des Dosenunterteils (10) im oberen, vom Dosenoberteil (15) übergriffenen Bereich nach innen gekröpft ist.

5. Metallhydridspeicher nach einem der Ansprüche 1—4, dadurch gekennzeichnet, daß der Innenmantel (13, 1) des Dosenunterteils (10) jeweils in einem Teilbereich als Kegelmantel (13) und im übrigen als Zylindermantel (14) ausgebildet ist.

6. Metallhydridspeicher nach Anspruch 5, dadurch gekennzeichnet, daß die Mantellinien des Kegels (13) und des Zylinders (14) in der Summe jeweils größe sind als der Grundkreisradius des Kegels (13) abzüglich Außenradius des Gasführungsrohres (7).

7. Metallhydridspeicher nach einem der Ansprüche 1—6, dadurch gekennzeichnet, daß die Außenmäntel (12, 17) jeweils an der Innenwand des zylinderförmigen Teils (4) des Druckbehälters (1) anliegen.

8. Metallhydridspeicher nach einem der Ansprüche 1—7, dadurch gekennzeichnet, daß der Innenmantel (18) des Dosenoberteils (15) jeweils in seiner Höhe so bemessen ist, daß er mit dem Gasführungsrohr (7) zur Anlage kommt, wenn er in die Ebene der Deckfläche des Dosenoberteils (15) gestreckt wird.

9. Metallhydridspeicher nach einem der Ansprüche 1—8, dadurch gekennzeichnet, daß Dosenunterteil (10) und Dosenoberteil (15) jeweils formschlüssig miteinander verbunden sind.

10. Metallhydridspeicher nach Anspruch 9, dadurch gekennzeichnet, daß der Formschluß als nach außen gerichtete Bördelung (19) am Rand des Innenmantels (18) des Dosenoberteils (15) ausgebildet ist.

11. Metallhydridspeicher nach einem der Ansprüche 1—10, dadurch gekennzeichnet, daß der Boden des Dosenunterteils (10) jeweils eine ringförmig um das Gasführungsrohr (7) herumlaufende, in das Doseninnere gewölbte Sicke (11) aufweist.

12. Metallhydridspeicher nach einem der Ansprüche 1—10, dadurch gekennzeichnet, daß die Deckfläche des Dosenoberteils (15) jeweils eine ringförmig um das Gasführungsrohr (7) herumlaufende, in das Doseninnere gewölbte Sicke (11) aufweist.

13. Metallhydridspeicher nach einem der Ansprüche 1—12, dadurch gekennzeichnet, daß das Volumen der Dosen (5) durch mindestens eine Zwischenwand (16) aufgeteilt ist.

14. Metallhydridspeicher nach Anspruch 13, dadurch gekennzeichnet, daß die Zwischenwand als eingelegter ringförmiger Zwischenboden (16) ausgebildet ist.

15. Verfahren zur Herstellung und Aktivierung eines Metallhydridspeichers nach Anspruch 1, dadurch gekennzeichnet, daß eine hydrierfähige Metallschmelze in einer Granulatgröße von 0,2—2 mm hergestellt wird, daß die Dosen vollständig mit dem Granulat gefüllt und verschlossen werden, daß die Dosen in den an einer Stirnseite offenen Druckbehälter eingebracht werden, daß die offene Stirnseite des Druckbehälters geschlossen wird und der Metallhydridspeicher in an sich bekannter Weise durch Evakuieren, Erhitzen und anschließendes Beladen mit Wasserstoff aktiviert wird.

16. Abänderung des Verfahrens nach Anspruch 15, dadurch gekennzeichnet, daß die Speichermasse in den Dosen noch außerhalb des Druckbehälters erhitzt und evakuiert sowie mittels Schutzgas gegenüber atmosphärischen Einflüssen immunisiert wird und der Metallhydridspeicher nach Verschließen des Druckbehälters zur Aktivierung nur noch mit Wasserstoff beladen wird.

17. Verfahren nach Anspruch 15 oder 16, dadurch gekennzeichnet, daß die Dosen nach dem Verschließen gegen unbeabsichtigtes Öffnen gesichert werden, z.B. durch Formschluß.

## Revendications

1. Réservoir d'hydrure métallique sous forme de réservoir sous pression cylindrique, comportant un tube-filtre central, en tant que tube d'écoulement de gaz, le métal granulé, susceptible d'être hydrogéné, étant subdivisé en couches, en direction axiale, par des tôles de cloisonnement, qui présentent une ouverture centrale, caractérisé en ce que les tôles de cloisonnement forment, avant le premier chargement du réservoir d'hydrure métallique avec de l'hydrogène, à chaque fois, la partie supérieure (15) et la partie inférieure (10) d'un récipient fermé, dont le volume, complètement rempli du métal (8) susceptible d'être hydrogéné, dans son ensemble est plus petit que le volume interne net du réservoir sous pression (1), au moins de la valeur qui correspond à l'augmentation de volume spécifique du métal (8) respectivement utilisé dans l'état hydrogéné, après de multiples chargements et déchargements, par rapport à l'état initial non chargé.

2. Réservoir d'hydrure métallique selon la revendication 1, caractérisé en ce que la partie inférieure (10) du récipient comprend, à chaque fois, une enveloppe interne (13, 14) se trouvant contre l'ouverture centrale et une enveloppe externe (12) se trouvant contre la paroi interne cylindrique (4) du réservoir sous pression (1), qui se terminent vers le haut en formant un plan.

3. Réservoir d'hydrure métallique selon la revendication 1 ou 2, caractérisé en ce que la partie supérieure (15) du récipient recouvre, à chaque fois, la partie inférieure (10) du récipient par une enveloppe externe (17) et une enveloppe interne (18).

4. Réservoir d'hydrure métallique selon la revendication 3, caractérisé en ce que l'enveloppe externe (12) de la partie inférieure (10) du récipient est coudée vers l'intérieur dans la zone supérieure, recouverte par la partie supérieure (15) du récipient.

5. Réservoir d'hydrure métallique selon une des revendications 1 à 4, caractérisé en ce que l'enveloppe interne (13, 14) de la partie inférieure (10) du récipient est réalisée, à chaque fois, dans une zone partielle, en tant qu'enveloppe conique (13) et, pour le reste, en tant qu'enveloppe cylindrique (14).

6. Réservoir d'hydrure métallique selon la revendication 5, caractérisé en ce que les génératrices du cône (13) et du cylindre (14) dans leur ensemble sont, à chaque fois, plus grandes que le rayon de base du cône (13), déduction faite du rayon externe du tube d'écoulement de gaz (7).

7. Réservoir d'hydrure métallique selon une des revendications 1 à 6, caractérisé en ce que les enveloppes externes (12, 17) sont, à chaque fois, adjacentes à la paroi interne de la partie cylindrique (4) du réservoir sous pression (1).

8. Réservoir d'hydrure métallique selon une des revendications 1 à 7, caractérisé en ce que l'enveloppe interne (18) de la partie supérieure (15) du récipient présente, à chaque fois, une hauteur telle qu'elle vient en appui avec le tube d'écoulement de gaz (7), quand elle est étirée dans le plan de la surface de recouvrement de la partie supérieure (15) du récipient.

9. Réservoir d'hydrure métallique selon une des revendications 1 à 8, caractérisé en ce que la partie inférieure (10) du récipient et la partie supérieure (15) du récipient sont reliées, à chaque fois, l'une à l'autre par fermeture géométrique.

10. Réservoir d'hydrure métallique selon la revendication 9, caractérisé en ce que la fermeture géométrique est réalisée en tant que rebord orienté vers l'extérieur (19) au bord de l'enveloppe interne (18) de la partie supérieure (15) du récipient.

11. Réservoir d'hydrure métallique selon une des revendications 1 à 10, caractérisé en ce que le fond de la partie inférieure (10) du récipient présente, à chaque fois, une moulure (11) cintrée vers l'intérieur du récipient, entourant de façon annulaire le tube d'écoulement de gaz (7).

12. Réservoir d'hydrure métallique selon une des revendications 1 à 10, caractérisé en ce que la surface de recouvrement de la partie supérieure (15) du récipient présente, à chaque fois, une moulure (11) cintrée vers l'intérieur du récipient, entourant de façon annulaire le tube d'écoulement de gaz (7).

13. Réservoir d'hydrure métallique selon une des revendications 1 à 12, caractérisé en ce que le volume des récipients (5) est divisé par au moins une paroi intermédiaire (16).

14. Réservoir d'hydrure métallique selon la revendication 13, caractérisé en ce que la paroi intermédiaire est réalisée sous forme de fond intermédiaire annulaire inséré (16).

15. Procédé pour la fabrication et l'activation d'un réservoir d'hydrure métallique selon la revendication 1, caractérisé en ce que des granulés métalliques susceptibles d'être hydrogénés ayant une taille de 0,2—2 mm sont fabriqués, en ce que les récipients sont remplis complètement des granulés et fermés, en ce que les récipients sont mis en place dans le réservoir sous pression ouvert sur une face frontale, en ce que la face frontale ouverte du réservoir est fermée et le réservoir d'hydrure métallique est activé, de façon connue en soi, par mise sous vide, chauffage et chargement ultérieur d'hydrogène.

16. Variante du procédé selon la revendication 15, caractérisée en ce que la masse de remplissage des récipients est chauffée et mise sous vide à l'extérieur du réservoir, ainsi que protégée des influences atmosphériques par du gaz inerte, et le réservoir d'hydrure métallique n'est plus que chargé d'hydrogène, après la fermeture du réservoir, pour l'activation.

17. Procédé selon la revendication 15 ou 16, caractérisé en ce que les récipients après fermeture sont garantis contre une ouverture involontaire, par exemple par fermeture géométrique.

## Claims

1. A metal hydride storage container in the form of a cylindrical pressure vessel with a centrally located filter pipe as a gas guidance pipe, with the granulated hydrogenatable metal melt being subdivided into discs in the axial direction by partition plates which have a central hole, characterised in that before the first loading of the metal hydride storage container with hydrogen the partition plates in each case form the upper section (15) and lower section (10) of a closed container, the total volume filled completely with the hydrogenatable metal melt (8) of which, compared with the net internal volume of the pressure vessel (1), is smaller by at least the amount which corresponds to the specific increase in volume of the respective metal melt (8) used in the hydrogenated state after loading and unloading several times compared with the original unloaded state.

2. A metal hydride storage container according to Claim 1, characterised in that the lower section (10) of the container has in each case an inner shell (13, 14) resting against the central hole and an outer shell (12) resting against the cylindrical inner wall (4) of the pressure vessel (1), which shells end in one plane at the top.

3. A metal hydride storage container according to Claim 1 or 2, characterised in that the upper container section (15) in each case overlaps the lower container section (10) with an outer shell (17) and an inner shell (18).

4. A metal hydride storage container according to Claim 3, characterised in that the outer shell (12) of the lower container section (10) is offset inwards in the upper region which is overlapped by the upper container section (15).

5. A metal hydride storage container according to one of Claims 1 to 4, characterised in that the inner shell (13, 14) of the lower container section (10) in each case is formed in a partial region as a tapered shell (13) and as a cylindrical shell (14) in the rest.

6. A metal hydride storage container according to Claim 5, characterised in that the sum of the surface lines of the taper (13) and the cylinder (14) is greater in each case than the base circle radius of the taper (13) minus the outer radius of the gas guidance pipe (7).

7. A metal hydride storage container according to one of Claims 1—6, characterised in that the outer shells (12, 17) each rest against the inner wall of the cylindrical section (4) of the pressure vessel (1).

8. A metal hydride storage container according to one of Claims 1—7, characterised in that the height of the inner shell (18) of the upper container section (15) in each case is such that it comes to rest against the gas guidance pipe (7) when it is extended into the plane of the top surface of the upper container section (15).

9. A metal hydride storage container according to one of Claims 1—8, characterised in that the lower container section (10) and upper container section (15) are each positively connected to each other.

10. A metal hydride storage container according to Claim 9, characterised in that the positive connection is constructed as an outwardly pointing flange (19) on the edge of the inner shell (18) of the upper container section (15).

11. A metal hydride storage container according to one of Claims 1—10, characterised in that the base of the lower container section (10) in each case has a bead (11) which runs in a ring around the gas guidance pipe (7) and curves into the interior of the container.

12. A metal hydride storage container according to one of Claims 1—10, characterised in that the top surface of the upper container section (15) in each case has a bead (11) which runs in a ring around the gas guidance pipe (7) and curves into the interior of the container.

13. A metal hydride storage container according to one of Claims 1—12, characterised in that the volume of the containers (5) is divided up by at least one partition (16).

14. A metal hydride storage container according to Claim 13, characterised in that the partition is constructed as an inserted annular intermediate base (16).

15. A process for the production and activation of a metal hydride storage container according to Claim 1, characterised in that a hydrogenatable metal melt in a granule size of 0.2—2 mm is produced, that the containers are completely filled with the granules and closed, that the containers are introduced into the pressure vessel which is open at one end, that the open end of the pressure vessel is closed and the metal hydride storage container is activated in known manner by evacuation, heating and subsequent loading with hydrogen.

16. A modification of the process according to Claim 15, characterised in that the substance stored in the containers is heated and evacuated outside the pressure vessel and is immunised against atmospheric influences by means of protective gas and the metal hydride storage container is only loaded with hydrogen for activation after the pressure vessel is closed.

17. A process according to Claim 15 or 16, characterised in that the containers are secured against unintentional opening after closing, for instance by a positive connection.

Fig.1

EP 0 188 996 B1

Fig. 2

Fig.3

Fig. 4

Fig. 5